Europäisches Patentamt

European Patent Office

Office européen des brevets

(11) Veröffentlichungsnummer: **0 473 146 A1**

# EUROPÄISCHE PATENTANMELDUNG

(21) Anmeldenummer: **91114487.1**

(51) Int. Cl.⁵: **B60K 5/10**, B62D 25/00

(22) Anmeldetag: **28.08.91**

(30) Priorität: **31.08.90 DE 9012516 U**

(43) Veröffentlichungstag der Anmeldung:
**04.03.92 Patentblatt 92/10**

(84) Benannte Vertragsstaaten:
**AT BE CH DE DK ES FR IT LI NL SE**

(71) Anmelder: **Karl Kässbohrer Fahrzeugwerke GmbH
Kässbohrerstrasse 13 Postfach 2660
W-7900 Ulm (Donau)(DE)**

(72) Erfinder: **Bückers, Reinhard, Dipl.-Ing.
Emershofer Weg 10a
W-7917 Vöhringen(DE)**

(74) Vertreter: **Patentanwälte Grünecker,
Kinkeldey, Stockmair & Partner
Maximilianstrasse 58
W-8000 München 22(DE)**

(54) **Fahrzeug mit einem eine Antriebseinheit tragenden Rahmen.**

(57) Bei einem Fahrzeug mit einem eine Antriebseinheit (2) tragenden Rahmen, der einen Grundrahmen (10) und einen zur Zugänglichkeit der Antriebseihheit gegenüber diesem um eine im wesentlichen horizontale Schwenkachse (54) verschwenkbaren, als Klapprahmen (4) ausgebildeten Rahmenabschnitt (4) umfaßt, ist die Zugänglichkeit zur Antriebseinheit verbessert und die Montage beziehungsweise Demontage derselben erleichtert, in dem auf dem Klapprahmen (4) die Antriebseinheit gelagert ist und der Klapprahmen als Trage-, Montage- und Reparatureinheit ausgebildet ist, wobei dieser heckseitig am Grundrahmen (10) um eine horizontale Querachse verschwenkbar gelagert und an diesem lösbar befestigt ist.

FIG.1

EP 0 473 146 A1

Die Erfindung betrifft ein Fahrzeug mit einem eine Antriebseinheit tragenden Rahmen, der einen Grundrahmen und einen zur Zugänglichkeit der Antriebseinheit gegenüber diesem um eine im wesentlichen horizontale Schwenkachse verschwenkbaren, als Klapprahmen ausgebildeten Rahmenabschnitt umfaßt.

Aus der GB-A-2 151 193 ist ein Fahrzeug dieser Art bekannt. Die Antriebseinheit ist auf einem Grundrahmen montiert. Ein Rahmenabschnitt ist um eine im wesentlichen in Längsrichtung des Fahrzeuges verlaufender Schwenkachse am Grundrahmen verschwenkbar gelagert. Wird der Rahmenabschnitt nach unten verschwenkt, sind beispielsweise Kupplung und Getriebe von unten zugänglich. Diese Antriebsteile sind demontierbar und für weitere Arbeiten aus dem Fahrzeug entnehmbar.

Nachteilig bei dem vorbekannten Fahrzeug ist, daß durch Verschwenken des Klapprahmen nur ein kleiner Teil der Antriebseinheit besser zugänglich ist. Um etwaige Servicearbeiten zu verrichten, müssen zusätzlich Motorabdeckungen, wie zum Beispiel Heckklappen oder sonstige geöffnet oder entfernt werden und zum Beispiel ein Abflanschen einer Gelenkwelle wird in dem beengten Raum des Motorraumes durchgeführt. Bei einer Montage beziehungsweise Demontage zum Beispiel des gesamten Motors beziehungsweise Triebwerks, ist der Arbeitsaufwand zum Lösen beziehungsweise Befestigen aller am Motor angeschlossen Teile und Verbindungen daher zeitraubend und schwierig.

Insbesondere bei quer eingebautem Motor beziehungsweise Triebwerk ist eine Montage beziehungsweise Demontage aufgrund der verwendeten Motor- und Getriebegrößen erschwert, da durch die maximale Fahrzeugaußenbreite von 2.500 mm nur wenig Raum zwischen den Fahrzeugseitenverkleidungen und der Antriebseinheit verbleibt.

Auch bei einem nach unten verschwenkten Klapprahmen ist gemäß der GB-A-2 151 193 die Zugänglichkeit des Motorraums von der Unterseite des Fahrzeuges beschränkt, da verschiedene Quer- und Längsträger und gegebenenfalls ein zusätzlicher Motorquerträger an der Unterseite verlaufen. Ein Zugriff auf Teile der Antriebseinheit ist nur zwischen den Trägern oder durch die relativ kleine, vom Klapprahmen freigegebene Öffnung möglich

Ein weiterer Nachteil ist, daß bei dem vorbekannten Fahrzeug der die Antriebseinheit tragende Rahmen nur mit erheblichem Arbeitsaufwand zur Montage beziehungsweise Demontage der Antriebseinheit vom Fahrzeug demontierbar beziehungsweise am Fahrzeug montierbar ist.

Der Erfindung liegt daher die Aufgabe zugrunde, ein Fahrzeug der eingangs genannten Art im Hinblick auf die Zugänglichkeit der Antriebseinheit zu verbessern und Montage beziehungsweise Demontage derselben zu erleichtern.

Diese Aufgabe wird bei einem Fahrzeug mit den Merkmalen des Oberbegriffs von Anspruch 1 dadurch gelöst, daß auf dem Klapprahmen die Antriebseinheit gelagert ist und der Klapprahmen als Trage-, Montage- und Reparatureinheit ausgebildet ist, wobei dieser am Grundrahmen um eine horizontale Querachse verschwenkbar gelagert und an diesem lösbar befestigt ist.

Dadurch, daß der Klapprahmen die gesamte Antriebseinheit trägt, ist diese insbesondere nach unten verschwenkbar und in Zusammenwirkung mit den geöffneten beziehungsweise entfernten Motorabdeckungen ist eine Demontage zum Beispiel des Motors oder des Getriebes, die für Servicearbeiten zwingend notwendig ist, in einfacher Weise möglich. Durch eine Hebe- und Senkvorrichtung kann der Klapprahmen in eine geneigte Stellung gebracht werden, in der zum Beispiel das Getriebe demontiert wird, um etwaige Servicearbeiten zu verrichten. Der Freigang des Getriebes kann durch die gleiche Hebe- und Senkvorrichtung unterstützt werden.

Sollte eine Demontage des gesamten Triebwerks notwendig sein, wird durch die Hebe- und Senkvorrichtung der Klapprahmen zuerst fixiert, dessen Verbindungen zum Grundrahmen gelöst und anschließend kann durch Absenken der Hebe- und Senkvorrichtung beziehungsweise Anheben des Fahrzeuges die Antriebseinheit komplett nach unten demontiert werden. Mittels des Klapprahmen ist die Antriebseinheit in einfacher Weise transportierbar. Gleichzeitig dient der Klapprahmen zur Montage und Reparatur der Antriebseinheit. Eine spezielle Befestigung der Antriebseinheit während zum Beispiel einer Reparatur ist nicht mehr notwendig, da stattdessen der Klapprahmen mit der darauf gelagerten Antriebseinheit in einfacher Weise befestigbar ist.

Durch die verschwenkbare Lagerung um eine horizontale Querachse, zum Beispiel heckseitig an einem Querträger des Grundrahmens ist die Antriebseinheit in einfacher Weise nach unten verschwenkbar und dem Servicepersonal entgegenschwenkbar. Zusätzlich zu der Querachse sind am Grundrahmen in einfacher Weise Befestigungseinrichtungen für den Klapprahmen zur lösbaren Befestigung ausbildbar.

Bei einem Fahrzeug mit quer eingebautem Heckmotor muß zum Beispiel nur die Heckklappe geöffnet werden und durch Verschwenken des Klapprahmens wird die Antriebseinheit teilweise durch die Decköffnung herausgeschwenkt und ist für die entsprechenden Arbeiten sehr leicht zugänglich.

Zur Ausbildung eines einfachen, stabilen Klapprahmens, ist es von Vorteil, wenn der Klapprahmen einen im wesentlichen rechteckigen Querschnitt aufweist und aus zwei Querträger und zwei Längsträgern gebildet ist. Die Verbindung der Längsträger und der Querträger kann beispielsweise durch Verschrauben oder Verschweißen gebildet werden.

Bei dieser Ausführungsform ist es von Vorteil, wenn die Längsträger des Klapprahmens am Grundrahmen, beispielsweise an dessen heckseitigem Querträger, verschwenkbar gelagert sind. Auf diese Weise sind nur die Enden der Längsträger zum Beispiel über Bolzen mit dem Grundrahmen verschwenkbar verbunden, während der dem Grundrahmen benachbarte Querträger des Klapprahmens keine weitere Verbindung zum Grundrahmen aufweisen muß.

Um entsprechend des Gewichts der Antriebseinheit eine ausreichende Stabilität der die Hauptlast tragenden Längsträger zu erzielen, ist es günstig, wenn diese im wesentlichen vertikal angeordnete, entlang der Längsträger verlaufende Versteifungen aufweisen. Diese versteifen die Längsträger so weit, daß eine Durchbiegung aufgrund des Gewichts der Antriebseinheit vernachlässigbar ist.

Dabei erweist es sich weiterhin als günstig, wenn ein zum jeweiligen Längsträger senkrecht verlaufender Verbindungs- und Anschlagflansch an dem dem Querträger benachbarten Ende jeder Versteifung angeordnet ist. Mit Hilfe dieses Flansches erfolgt sowohl die Fixierung des Klapprahmens für den Fahrbetrieb des Fahrzeuges, sowie die Festlegung der unverschwenkten Stellung des Klapprahmens mit Hilfe eines Anschlags des Flansches auf dem Querträger des Grundrahmens.

Bei einer vorteilhaften Ausführungsform ist der einem heckseitigen Querträger des Grundrahmens benachbarte Querträger des Klapprahmens im wesentlichen zwischen den Längsträgern angeordnet, während der Endquerträger sich beidseitig über die Längsträger hinaus in etwa über die gesamte Fahrzeugbreite erstreckt. Der Endquerträger dient auf diese Weise über die gesamte Fahrzeugbreite als Stabilisierungselement für eventuelle Unfälle des Fahrzeugs, wobei er gleichzeitig die Antriebseinheit vor Beschädigung schützt.

Um einen möglichst großen Schwenkwinkel des Klapprahmens zu erzielen, ist es von Vorteil, wenn der Endquerträger gegenüber dem Querträger höher angeordnet ist und in etwa in Höhe einer an der Fahrzeugverkleidung ausgebildeten Stoßstange verläuft. Wenn der Klapprahmen z.B. auf die Fahrbahnoberfläche verschwenkt wird, ist durch die höhenunterschiedliche Anordnung von Querträger und Endquerträger ein größerer Schwenkwinkel und damit eine bessere Zugänglichkeit der Antriebseinheit erzielt. Außerdem kann durch die niedrige Anordnung des inneren Querträgers insbesondere bei Niederflurbussen das Triebwerk,sowie die das Triebwerk mit der Antriebsachse verbindende Gelenkwelle platzsparend angeordnet werden, so daß im Bus die Gänge bzw. die Bodenfläche keine oder nur eine sehr geringe Steigung aufweisen. Gleichzeitig ist aber durch den höher angeordneten Endquerträger eine Versteifung des Fahrzeuges in Höhe der Stoßstange und damit ein Schutz bei Zusammenstößen mit anderen Fahrzeugen gewährleistet.

In diesem Zusammenhang erweist es sich weiterhin als vorteilhaft, wenn der Endquerträger beidseitig unter einem Winkel zur Querträgerlängsachse in Richtung des inneren Querträgers verlaufenden Winkelendstücke aufweist. Diese verlaufen in etwa in Richtung der Krümmung der Kanten des Fahrzeuges zwischen einer Stirnseite und den Seitenflächen. Dies stabilisiert das Fahrzeug an diesen Stellen und schützt gleichzeitig die Antriebseinheit.

Um eine zusätzliche Befestigung des Endquerträgers und gleichzeitig eine erhöhte Versteifung des Fahrzeuges zu erzielen, ist es von Vorteil, wenn die Winkelendstücke Befestigungseinrichtungen zur Befestigung an der Fahrzeugverkleidung aufweisen. Dies kann z.B. mit Hilfe einer Anzahl von Schrauben erfolgen, die die Winkelendstücke mit einer Stirnseiten- bzw. Seitenflächenverkleidung verschrauben. Vor dem Verschwenken des Klapprahmens müssen diese Befestigungseinrichtungen gelöst werden.

Um die Antriebseinheit nur auf dem Klapprahmen zu lagern, ist es günstig, wenn eine Anzahl von Lagerelementen zur Lagerung der Antriebseinheit am Klapprahmen angeordnet ist. Eine weitere Befestigung der Antriebseinheit an dem Grundrahmen oder ggf. an vertikalen Säulen der Fahrzeugkarosserie ist auf diese Weise nicht notwendig.

Dabei ist es besonders von Vorteil, wenn zumindest zwei der Lagerelemente als zentrierende Schräglager und zwei als Kastenlager ausgebildet sind. Die Schräglager dienen insbesondere zur Dämpfung von Wank- bzw. Nickbewegungen der Antriebseinheit,während die Kastenlager insbesondere Hubschwingungen dämpfen.

Bei einer Einbauweise der Antriebseinheit ist es insbesondere günstig, wenn die Schräglager bzw. Kastenlager bei einer quer eingebauten Antriebseinheit im wesentlichen an den Enden jeweils eines Längsträger angeordnet sind. Dies bedeutet, daß an den jeweiligen Enden eines Längsträgers jeweils ein Kastenlager und an den entsprechenden Enden des anderen Längsträgers jeweils ein Zentrierlager angeordnet ist. Durch die Anordnung der Lager an den Enden oder in der Nähe der Enden der Längsträger ist auf diese Weise der Motor stabil und sicher gelagert.

Die Schräglager können durch im wesentlichen V-förmige Winkelprofile und an diesen lösbar befestigte Federelemente gebildet werden. Durch die Verwendung der V-förmigen Winkelprofile ist die Schräglage der Lager in einfacher Weise herstellbar und es können einfache Federelemente zur Lagerung des Motors verwendet werden.

Die Kastenlager können durch im wesentlichen L-förmige Winkelprofile und an diesen lösbar befestigten Federelementen gebildet sein. Die V-förmigen als auch die L-förmigen Winkelprofile können auf einfache Weise mit den Querträgern bzw. mit den Enden der Längsträgers z.B. durch Schweißverbindungen verbunden werden. Durch in den Winkelprofilen angeordnete Bohrungen können die Federelemente befestigt und so der Motor gelagert werden.

Bei einer Ausführungsform erweist es sich als vorteilhaft, wenn zumindest ein Lagerelement zur Anpassung an die Abmessungen der Antriebseinheit über einen Verbindungsarm an einem Längsträger und/oder Querträger gelagert ist. Auf diese Weise ergeben sich flexiblere Möglichkeiten zur Lagerung der Antriebseinheit, wobei gleichzeitig die volle Verschwenkbarkeit der gesamten Antriebseinheit gewährleistet bleibt.

Weiterhin ist es günstig, wenn ein Auflagerarm zur Lagerung der Antriebseinheit zwischen diesem und einem Lagerelement, wie z.B. einem Kastenlager, angeordnet ist. Auch diese Maßnahme dient zur Anpassung der Lagerelemente an die Abmessungen der Antriebseinheit. Die Auflagerarme können auch beidseitig zur Antriebseinheit angeordnet sein und auf beiden Kastenlagern gelagert werden. Ebenso sind Kombinationen mit den über einen Verbindungsarm am Klapprahmen befestigten Lagerelementen möglich.

Die erfindungsgemäß vorgeschlagenen Lösungen und vorteilhafte Ausführungsbeispiele davon werden im folgenden anhand der in der Zeichnaung dargestellten Figuren erläutert und beschrieben.

Es zeigt:

Figur 1    ein Fahrzeug in Seitenansicht mit dem erfindungsgemäßen Klapprahmen;

Figur 2    eine Draufsicht auf den Klapprahmen und

Figur 3    eine Seitenansicht des Klapprahmens.

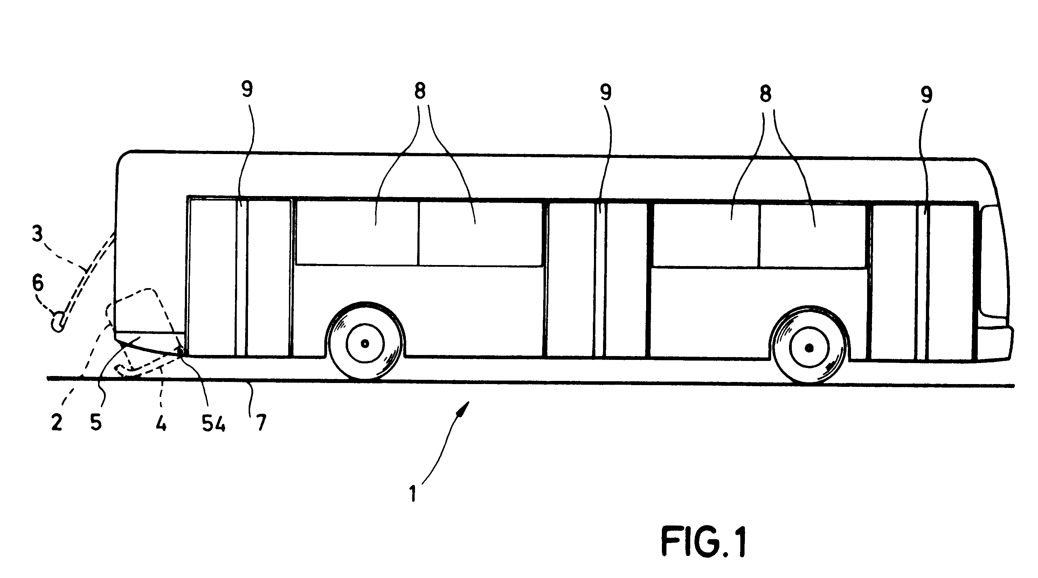

In Figur 1 ist ein Fahrzeug 1 mit dem erfindungsgemäßen Klapprahmen 4 dargestellt. Das Fahrzeug 1 ist ein eine Anzahl von Fenstern 8 und Türen 9 aufweisender Niederflurbus mit einer am Heck auf dem Klapprahmen 4 angeordneten, quer eingebauten Antriebseinheit 2.

Am Heck des Fahrzeugs 1 ist der Motorraum durch eine verschwenkbare Heckklappe 3 zugänglich. An dem der Fahrbahnoberfläche 7 benachbarten Ende der Heckklappe 3 ist an dieser eine Stoßstange 6 ausgebildet. Beim Verschwenken der Heckklappe 3 ist auch die Stoßstange 6 im wesentlichen über die gesamte Breite des Fahrzeuges 1 verschwenkbar. Nach Demontage der Stoßstangenecken 5, die sich von den Seitenwänden des Fahrzeugs bis zur Heckstoßstange 6 erstrecken, ist der Schwenkrahmen 4 mit der darauf gelagerten Antriebseinheit 2 um die horizontale Schwenkachse 54 bis auf die Fahrbahnoberfläche 7 nach unten verschwenkbar. Die Antriebseinheit 2 tritt durch die sonst durch die Heckklappe 3 verschlossene Öffnung aus und ist in einem Kantenbereich sichtbar.

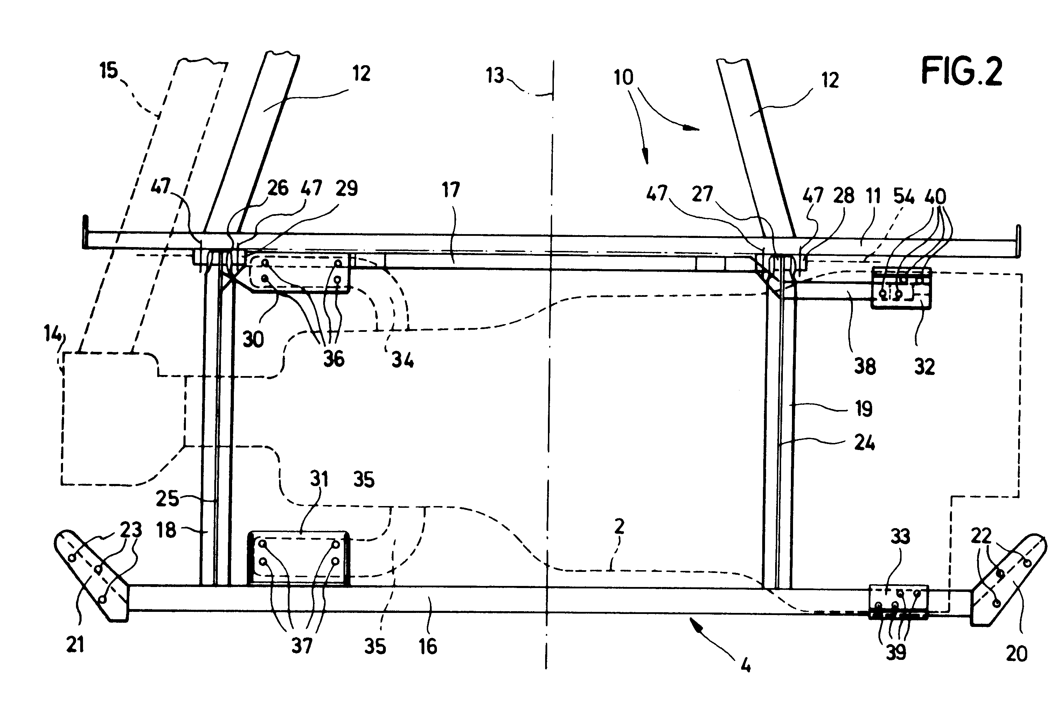

In Figur 2 ist der erfindungsgemäße Klapprahmen 4 in einer Draufsicht dargestellt. Zur Verdeutlichung ist gestrichelt die Antriebseinheit 2, sowie ein an die Antriebseinheit 2 angeschlossener Winkeltrieb 14 mit einer zur nicht-dargestellten Antriebsachse verlaufender Gelenkwelle 15 dargestellt.

Der Klapprahmen 4 ist verschwenkbar an einem Grundrahmen 10 gelagert. Dieser ist durch einen rechtwinkelig zur Fahrzeuglängsachse 13 verlaufenden Querträger 11 sowie von diesem unter einem Winkel auf die Fahrzeuglängsachse 13 zulaufende Längsträger 12 gebildet. In etwa gegenüber den Anschlußpunkten der Längsträger 12 am Querträger 11 ist mit Hilfe von Schwenklagern 26 und 27 der Klapprahmen 4 verschwenkbar gelagert.

Der Klapprahmen 4 selbst weist im wesentlichen in Draufsicht eine rechteckförmige Gestalt auf, wobei die längeren Rechteckseiten durch einen inneren Querträger 17 und durch einen Endquerträger 16, sowie die kürzeren Rechteckseiten durch zwei Längsträger 18 und 19 gebildet sind. Die Schwenklager 26 und 27 sind an den dem Querträger 11 benachbarten Enden der Längsträger 18 und 19 ausgebildet. Der Querträger 17 erstreckt sich im wesentlichen parallel und in direkter Nachbarschaft zum Querträger 11 und verläuft zwischen den Längsträgern 18 und 19. In etwa mittig verläuft auf jedem Längsträger 18 und 19 eine Versteifung 25 bzw. 24. An den dem Querträger 11 benachbarten Ende der Versteifungen 25 und 24 weisen diese einen rechtwinkelig zum jeweiligen Längsträger 18 bzw. 19 verlaufenden Verbindungs- und Anschlagflansch 28 bzw. 29 auf. In jedem der beiden Verbindungs- und Anschlagflansche 28 und 29 sind jeweils zwei Bohrungen 47 beidseitig zum jeweiligen Längsträger 18 bzw. 19 zur Befestigung mit Hilfe von Schrauben am Querträger 11 ausgebildet.

Der Endquerträger 16 weist im wesentlichen die gleiche Länge wie der Querträger 11 auf, die in etwa der Fahrzeugbreite entspricht. An seinen Enden sind unter einem Winkel auf den Querträger 17 zulaufende Winkelendstücke 20 und 21 angeordnet. In den Winkelendstücken 20 bzw. 21 sind eine Anzahl von Bohrungen 22 bzw. 23 zur Befestigung mit Hilfe von Schrauben an der äußeren Verkleidung des Fahrzeugs ausgebildet.

Sowohl am Querträger 17 als auch am Endquerträger 16 sind an den Enden des Längsträgers 18 Kastenlagerbefestigungen 30 bzw. 31 angeordnet. Diese weisen im wesentlichen einen rechteckförmigen Querschnitt auf, wobei vier Bohrungen 36 bzw. 37 in diesen Kastenlagerbefestigungen ausgebildet sind.

In Nachbarschaft des Längsträgers 19 sind zwei Schräglagerbefestigungen 32 und 33 ausgebildet. Die Befestigung 33 weist vier Bohrungen 39 auf und ist auf dem Endquerträger 16 nahe eines Winkelendstücks 20 angeordnet. Die Schräglagerbefestigung 32 weist zwei entsprechende Bohrungen 40 auf und ist mit Hilfe eines Verbindungsarms 38 am Querträger 17 gelagert. Der Verbindungsarm 38 verläuft im wesentlichen parallel zum Querträger 17 und ist nahe eines Endes des inneren Querträgers am Längsträger 19 im Abstand zum Querträger angeordnet. Der Verbindungsarm 38 weist eine in etwa dem Abstand der Schräglagerbefestigung 39 vom Längsträger 19 entsprechende Länge auf. Sowohl die Kastenlagerbefestigungen 30 und 31 als auch die Schräglagerbefestigungen 32 und 33 sind daher jeweils in etwa abstandsgleich zur Fahrzeuglängsachse 13 angeordnet.

Die Antriebseinheit 2 ist auf in dieser Figur nicht dargestellten, an den Schräglagerbefestigungen 32 und 33 befestigten Schräglagern sowie auf ebenfalls in dieser Figur nicht dargestellten an den Kastenlagerbefestigungen 30 und 31 befestigten Kastenlagern auf dem Klapprahmen 4 gelagert. Zur Lagerung der Antriebseinheit 2 auf den Kastenlagern sind zwei Auflagerarme 34 bzw. 35 seitlich zu dieser ausgebildet. Die Auflagerarme 34 und 35 sind beidseitig zur Antriebseinheit 2 angeordnet und verlaufen im wesentlichen spiegelbildlich zueinander. Der direkt an der Antriebseinheit 2 angeschlossene Abschnitt der Auflagerarme 34 und 35 ist in etwa viertelkreisförmig und ist durch einen parallel zum inneren bzw. Endquerträger 17 bzw. 16 verlaufenden auf den Kastenlagern aufliegenden Teil fortgesetzt.

Mit Hilfe des Klapprahmens 4 ist die Antriebseinheit 2 um die horizontale Schwenkachse 54 schwenkbar am Querträger 11 des Grundrahmens 10 gelagert und lösbar an diesem befestigt.

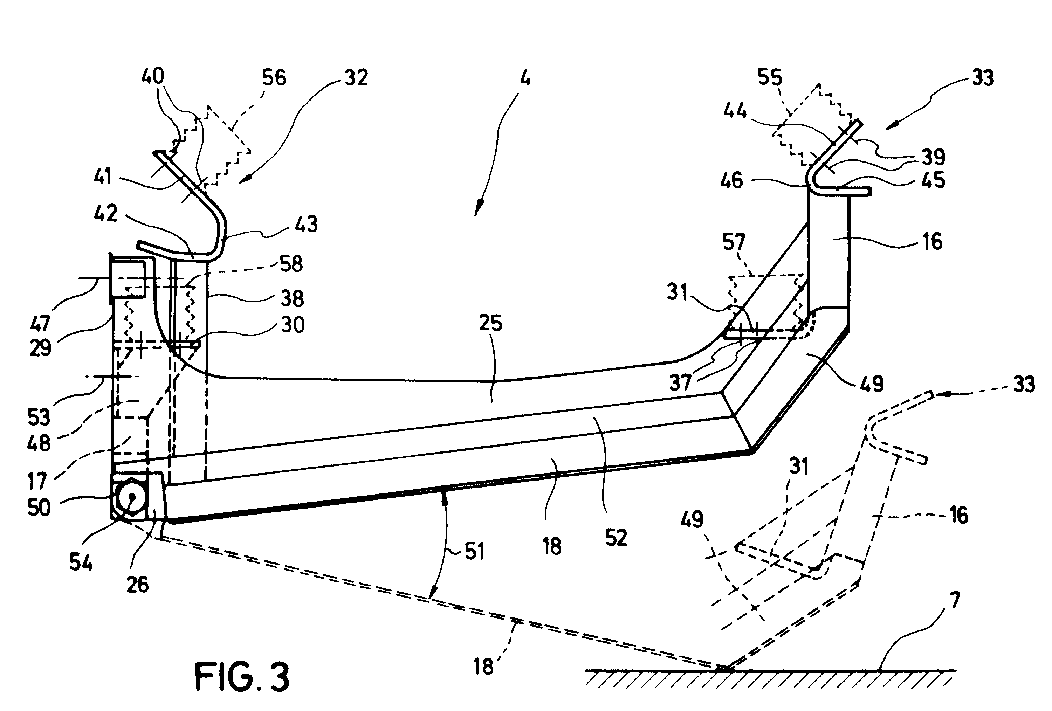

In Figur 3 ist eine Seitenansicht des erfindungsgemäßen Klapprahmens 4 dargestellt. Die gestrichelte Darstellung entspricht dabei dem um den Winkel 51 nach unten bis auf die Fahrbahnoberfläche 7 geschwenkten Klapprahmen 4.

In der Seitenansicht ist erkennbar, daß der Längsträger 18 und entsprechend der Längsträger 19 an einem dem Schwenklager 26 gegenüberliegenden Ende einen nach oben verlaufenden, einen stumpfen Winkel mit dem Längsträger 18 bzw. 19 einschließenden Verbindungsträger 49 aufweist. Am Ende dieses Verbindungsträgers ist der im Querschnitt im wesentlichen rechteckförmige Endquerträger 16 angeordnet. Der Längsträger 18 wird durch den Verbindungsträger 49, der einen hausförmigen Querschnitt aufweist, und den Versteifungseinsatz 25 gebildet. In der Figur 3 ist eine Dachfläche 52 sichtbar.

Die Oberseite des Versteifungseinsatzes 25 verläuft vom äußeren Querträger 16 im wesentlichen parallel zum Verbindungsträger 49 und in Fortsetzung in einem ersten Abschnitt in etwa parallel zum Längsträger 18, woran sich ein ansteigender Abschnitt, mit zunehmender Höhe anschließt, an dem der Verbindungs- und Anschlagflansches 29 angeordnet ist. Im oberen Ende des Verbindungs- und Anschlagflansches 29 ist zur Fixierung des Klapprahmens 4 am in dieser Figur nicht dargestellten Querträger 11 eine Bohrung 47 ausgebildet.

Unterhalb des Verbindungs- und Anschlagflansches 29 ist am Längsträger 18 das Schwenklager 26 ausgebildet. Mit Hilfe eines Bolzens 50 ist der Längsträger 18 um die horizontale Schwenkachse 54 verschwenkbar gelagert.

Der innere Querträger 17 weist einen im wesentlichen quadratförmigen Querschnitt auf, wobei an dessen oberer Quadratseite die Kastenlagerbefestigung 30 mit Hilfe eines Trägers 48 befestigt ist. Durch die Bohrung 53 ist der Träger 48 mit Hilfe einer Schraube am Querträger 11 entsprechend dem Verbindungs- und Anschlagflansch befestigbar.

Auf der Kastenlagerbefestigung 30 ist gestrichelt ein Federelement 58 zur Lagerung der Antriebseinheit dargestellt. Ein weiteres Federelement 56 ist auf der oberhalb des Kastenlagers dargestellten Schräglagerbefestigung 32 angeordnet. Diese weist einen im wesentlichen V-förmigen Querschnitt auf, wobei ein V-Schenkel 41 mit Hilfe zweier Schrauben 40 das Federelement 56 trägt und der zweite V-Schenkel 42 an dem Verbindungsarm 38 angeordnet ist. Zwischen beiden V-Schenkeln 41 und 42 erstreckt sich ein Verbindungsschenkel 43.

Zur weiteren Lagerung der Antriebseinheit sind am Endquerträger 16 eine weitere Kastenlagerbefestigung 31 sowie eine Schräglagerbefestigung 33 angeordnet. Die Kastenlagerbefestigung 31 weist einen L-förmigen Querschnitt auf, wobei ein L-Schenkel mit dem Endquerträger 16 verbunden ist und der andere L-Schenkel im wesentlichen senkrecht dazu verläuft. Dieser senkrecht zum Endquerträger 16 verlaufende L-Schenkel trägt ein Federelement 57, das mit Hilfe von Schrauben 37 an der Kastenlagerbefestigung 31 befestigbar ist.

Am oberen Ende ist auf dem äußeren Quertä-

ger 16 eine im wesentlichen V-förmige Schräglagerbefestigung 33 angeordnet. Ein V-Schenkel 45 ist direkt auf dem äußeren Querträger 16 angeordnet, während der andere V-Schenkel 44 mit diesem über den Verbindungsschenkel 46 verbunden ist und unter einem spitzen Winkel zu diesem verläuft. Auf dem V-Schenkel 44 ist mit Hilfe von Bohrungen 39 und entsprechender Schrauben ein Federelement 55 befestigt.

Nach Lösen der Befestigung 47 bzw. 53 ist der Klapprahmen 4 zwischen den beiden um den Winkel 51 verschwenkten Positionen hin- und herbewegbar.

**Patentansprüche**

1. Fahrzeug mit einem eine Antriebseinheit tragenden Rahmen, der einen Grundrahmen und einen zur Zugänglichkeit der Antriebseinheit gegenüber diesem um eine im wesentlichen horizontale Schwenkachse verschwenkbaren, als Klapprahmen ausgebildeten Rahmenabschnitt umfaßt,
dadurch **gekennzeichnet**,
daß auf dem Klapprahmen (4) die Antriebseinheit (2) gelagert ist und der Klapprahmen (4) als Trage-, Montage- und Reparatureinheit ausgebildet ist, wobei dieser heckseitig am Grundrahmen (10) um eine horizontale Querachse (54) verschwenkbar gelagert und an diesem lösbar befestigt ist.

2. Fahrzeug nach Anspruch 1,
dadurch **gekennzeichnet**,
daß der Klapprahmen (4) einen im wesentlichen rechteckigen Querschnitt aufweist und aus einem Querträger (17), einem Endquerträger (16) und zwei Längsträgern (18, 19) gebildet ist.

3. Fahrzeug nach Anspruch 2,
dadurch **gekennzeichnet**,
daß die Längsträger (18, 19) des Klapprahmens (4) am Grundrahmen (10) verschwenkbar gelagert sind.

4. Fahrzeug nach mindestens einem der vorangehenden Ansprüche,
dadurch **gekennzeichnet**,
daß die Längsträger (18, 19) im wesentlichen vertikal angeordnete, entlang der Längsträger verlaufende Versteifungen (24, 25) aufweisen.

5. Fahrzeug nach Anspruch 4,
dadurch **gekennzeichnet**,
daß ein zum Längsträger (18, 19) senkrecht verlaufender Verbindungs- und Anschlagflansch (28, 29) an den dem Querträger (11) benachbarten Ende der Versteifung (24, 25) angeordnet ist.

6. Fahrzeug nach mindestens einem der vorangehenden Ansprüche,
dadurch **gekennzeichnet**,
daß der einem heckseitigen Querträger (11) des Grundrahmens (10) benachbarte Querträger (17) des Klapprahmens (4) im wesentlichen zwischen den Längsträgern (18, 19) angeordnet ist, während der Endquerträger (16) sich beidseitig über die Längsträger (18, 19) hinaus in etwa über die gesamte Fahrzeugbreite erstreckt.

7. Fahrzeug nach Anspruch 6,
dadurch **gekennzeichnet**,
daß der Endquerträger (16) gegenüber dem Querträger (17) höher angeordnet ist und in etwa in Höhe einer an der Fahrzeugverkleidung ausgebildeten Stoßstange (6) verläuft.

8. Fahrzeug nach mindestens einem der vorangehenden Ansprüche,
dadurch **gekennzeichnet**,
daß der Endquerträger (16) beidseitig unter einem Winkel zur Querträgerlängsachse in Richtung des Querträgers (17) verlaufende Winkelendstücke (20, 21) aufweist.

9. Fahrzeug nach Anspruch 8,
dadurch **gekennzeichnet**,
daß die Winkelendstücke (20, 21) Befestigungseinrichtungen (22, 23) zur Befestigung an der Fahrzeugverkleidung aufweisen.

10. Fahrzeug nach mindestens einem der vorangehenden Ansprüche,
dadurch **gekennzeichnet**,
daß eine Anzahl von Lagerelementen (30, 31, 32, 33) zur Lagerung der Antriebseinheit (2) am Klapprahmen (4) angeordnet sind.

11. Fahrzeug nach mindestens einem der vorangehenden Ansprüche,
dadurch **gekennzeichnet**,
daß zumindest ein Lagerelement (32) zur Anpassung an die Abmessungen der Antriebseinheit (2) über einen Verbindungsarm (38) an einem Längsträger (19) und/oder Querträger (17) gelagert ist.

12. Fahrzeug nach mindestens einem der vorangehenden Ansprüche
dadurch **gekennzeichnet**,
daß ein Auflagerarm (34, 35) zur Lagerung der Antriebseinheit (2) zwischen dieser und einem Lagerelement (30, 31) angeordnet ist.

FIG.1

EP 0 473 146 A1

FIG.2

EP 0 473 146 A1

FIG. 3

EP 0 473 146 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 151 193 (SAAB-SCANIA) <br> * das ganze Dokument * * <br> – – – | 1-3,10 | B 60 K 5/10 <br> B 62 D 25/00 |
| A | GB-A-878 291 (LEYLAND MOTORS LTD.) <br> * das ganze Dokument * * <br> – – – | 5,6,8,10 | |
| A | AU-A-457 765 (ROBLEY C. BROWN) <br> * das ganze Dokument * * <br> – – – | 1-4 | |
| A | US-A-4 263 980 (GENERAL MOTORS CORP.) <br> * das ganze Dokument * * <br> – – – | 1-3 | |
| A | FR-A-655 489 (L. BAERSCH) <br> * das ganze Dokument * * <br> – – – – – | 1 | |

| | RECHERCHIERTE SACHGEBIETE (Int. Cl.5) |
|---|---|
| | B 60 K <br> B 62 D <br> B 60 P |

Der vorliegende Recherchenbericht wurde für alle Patentansprüche erstellt

| Recherchenort | Abschlußdatum der Recherche | Prüfer |
|---|---|---|
| Den Haag | 13 November 91 | TOPP-BORN S. |